(19) **Europäisches Patentamt**
**European Patent Office**
**Office européen des brevets**

(11) **EP 3 127 420 A1**

(12) **EUROPEAN PATENT APPLICATION**
published in accordance with Art. 153(4) EPC

(43) Date of publication:
**08.02.2017 Bulletin 2017/06**

(21) Application number: **15772795.9**

(22) Date of filing: **31.03.2015**

(51) Int Cl.:
***A01G 7/00*** *(2006.01)*          ***A01G 9/00*** *(2006.01)*
***A01G 9/02*** *(2006.01)*

(86) International application number:
**PCT/JP2015/060064**

(87) International publication number:
**WO 2015/152206 (08.10.2015 Gazette 2015/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **03.04.2014   JP 2014077212**

(71) Applicant: **Tsubakimoto Chain Co.
Osaka-shi, Osaka 530-0005 (JP)**

(72) Inventors:
• **ITO, Go
Osaka-shi
Osaka 530-0005 (JP)**
• **TSUTSUMI, Kazuhiro
Osaka-shi
Osaka 530-0005 (JP)**

• **HIRAI, Tatsuya
Osaka-shi
Osaka 530-0005 (JP)**
• **OKAZAKI, Yu
Osaka-shi
Osaka 530-0005 (JP)**
• **OHARA, Hitoshi
Osaka-shi
Osaka 530-0005 (JP)**
• **FUKUDA, Hirokazu
Sakai-shi
Osaka 599-8231 (JP)**
• **MORIYUKI, Shogo
Sakai-shi
Osaka 599-8231 (JP)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **CULTIVATION SYSTEM**

(57)     Provided is a cultivation system, whereby it becomes possible to improve and uniformize the quality of plant bodies cultivated in a plant production factory and to achieve cost reduction.

A cultivation system equipped with: multiple cultivation containers, each of which accommodates plant bodies and a culture medium for cultivating the plant bodies and is provided with a recording medium for recording identification information that is used for identifying each of the plant bodies; a cultivation shelf, in which multiple shelf plates respectively having the cultivation containers placed thereon are arranged at predetermined space intervals; light sources, each of which emits vegetating light over the upper surface of each of the shelf plates; and a conveyance device for conveying the cultivation containers between the multiple shelf plates. In the cultivation system, each of the cultivation containers can accommo-
date multiple plant bodies and is equipped with a recording medium, identification information that is used for identifying each of the accommodated multiple plant bodies. The cultivation system is additionally equipped with: an inspection unit which has an accommodation section in which one or more of the cultivation containers are accommodated, wherein the inspection unit can inspect each of the multiple plant bodies accommodate in the cultivation container or the cultivation containers placed in the accommodation unit; and a recording unit which can record the result of the inspection of each of the plant bodies, which is obtained by the inspection unit, on the recording medium provided in the cultivation containers in connection with the identification information for the corresponding plant body.

FIG. 2

**Description**

[Technical Field]

The present invention relates to a cultivation system employed in a plant factory where plants are grown in an indoor facility and, in particular, to a cultivation system in which quality improvement, quality equalization, and cost suppression of the grown plants are allowed to be realized.

[Background Art]

In recent years, an increasing number of plant factories where plants are grown in an indoor facility are operated. In addition to an application as vegetables for food, the plants grown in such plant factories are allowed to be used in various applications such as food processing, chemicals, and ornamentals. In such a plant factory, in an environment that the temperature and the humidity are maintained suitable for plant growth, performed are: seeding in cultivation containers; sprouting, greening, seedling raising, and cultivation performed by nutrition supply from cultivation medium in the containers and by light projection from light sources such as fluorescent lamps and LEDs; and harvesting. Such vegetables grown in the plant factory have excellent points like stable supply without influences of weather is achievable, high nutritive values are obtained by cultivation using suitable cultivation materials, and farming without agricultural chemicals is achievable because of absence of insect damage. On the other hand, problems arise in a high cost caused by heating and lighting expenses for maintaining the temperature and the humidity and for operating the light sources and the like and in a variation in the quality caused by inhomogeneity in the amount of light projection.

In order that cost suppression may be achieved, efficiency improvement, especially, advancement of mass production, is important. Thus, a system is employed in which: a cultivation shelf in which a large number of shelves accommodating cultivation containers are arranged in a vertical direction is provided; a light source is provided in each shelf; and placement and extraction of cultivation containers onto and from each shelf are automatically executed by a conveying machine (Patent Document 1).

In order that quality improvement and quality equalization may be realized, inspection of the growth state and plant sorting are also required. In order that inspection and sorting of the plants produced in a large amount may be realized at a low cost, automatic control is required.

As for the automation of plant inspection and sorting, various proposals have been made. Patent Document 2 discloses a technique that the cultivation container of each plant to be inspected is transferred by a transfer system so that the humidity of the cultivation medium in the cultivation container is successively measured once a day and then, when the humidity is lower than a given value, a liquid serving as a cultivation material is added to the cultivation medium. Further, Patent Document 2 discloses a configuration that a data storage storing an identifier is provided in the cultivation container and then a reader is provided in the transfer system so that the identifier of each cultivation container and the information based on a measurement value are recorded in correspondence to each other into a recorder in the system or, alternatively, an image of the plant is automatically acquired and then recorded into a recorder. Patent Document 3 discloses a technique that a chlorophyll fluorescence image of each plant is acquired so that the quality of the plant is measured and thereby the plant was sorted on the basis of the measurement result. Further, Patent Document 3 suggests a configuration of an apparatus in which a movable base, a robot arm, or the like is employed and then the plant is automatically sorted on the basis of the measurement result.

[Prior Art Document]

[Patent Document]

Patent Document 1: Japanese Patent Application Laid-Open Publication No. 2014-036580
Patent Document 2: Japanese Patent Application Laid-Open Publication (Translation of PCT Application) No. 2014-502851
Patent Document 3: Japanese Patent Application Laid-Open Publication (Translation of PCT Application) No. 2006-504956

[SUMMARY]

[Problems to be Solved by Invention]

According to the configurations disclosed in Patent Documents 2 and 3, a system in which plant inspection and sorting are both controlled automatically is expectable. However, in order that plants accepted in the actual market may be cultivated in a plant factory, a daily production of several thousand plants at a low cost with a high quality is required. Even if the system in which automatic measurement is performed once a day as disclosed in Patent Document 2 is combined with the configuration of inspection and sorting suggested in Patent Document 3, it is still difficult to implement mass production at a daily production of several thousand plants and quality equalization in the several thousand plants.

The present invention has been devised in view of such situations. An object thereof is to provide a cultivation system realizing quality improvement, quality equalization, and cost suppression of the plants grown in a plant factory.

[Means for Solving Problems]

The cultivation system according to one embodiment of the present invention includes: a plurality of cultivation containers each capable of accommodating a plant and a cultivation medium used for growing the plant and each provided with a recording medium recording identification information identifying the accommodated plant; a cultivation shelf provided with plural stages of shelf boards which are arranged at predetermined intervals and on which the cultivation containers are placed; a light source projecting greening light individually onto upper faces of the shelf boards; and a conveying machine conveying the cultivation container between the plurality of shelf boards, wherein the cultivation container is capable of accommodating a plurality of plants and provided with a container-side recording part recording identification information individually identifying the plurality of accommodated plants, into the recording medium, and wherein the cultivation system further comprises: an inspection part provided with an accommodation part accommodating one or a plurality of the cultivation containers and inspecting individually the plurality of plants contained in the cultivation container accommodated in the accommodation part; and a recording processing part recording an inspection result of each plant obtained by the inspection part, in correspondence to the identification information of the plurality of plants into the recording medium.

In the present invention, the identification information identifying each of the plurality of plants is recorded in the recording medium provided in the cultivation container in which the plurality of plants are accommodated and then the inspection result of each of the plurality of plants is recorded into the recording medium in correspondence to the identification information. Since the information concerning the raising state of each plant is recorded in a manner that each plant is identified, into the recording medium provided in the cultivation container accommodating the plurality of plants. Thus, the following time course is allowed to be observed with reference to the information concerning the raising information having been recorded and this situation is useful in the process of sorting or transplant.

The cultivation system according to one embodiment of the present invention is characterized in that the inspection part comprises: a dark box accommodating the cultivation container accommodated in the accommodation part; a measurement part executing chlorophyll fluorescence measurement in an inside of the dark box; and a calculation part calculating an evaluation index for each of the plurality of plants on the basis of a measurement result obtained by the measurement part.

In the present invention, chlorophyll fluorescence measurement is performed on each individual plant accommodated in the plant container and then the evaluation index for the individual plant is calculated from the data obtained by the measurement. The performance of the photosynthesis function is allowed to be evaluated on the basis of the chlorophyll fluorescence measurement performed in a non-contact manner. Here, the evaluation index employed here is not limited to the performance of the photosynthesis function and may be a numerical value, a symbol, or a character obtained from various factors.

The cultivation system according to one embodiment of the present invention is characterized in that the inspection part further comprises an imaging part capturing an image of the plurality of plants in an inside of the cultivation container accommodated in the accommodation part, and wherein the calculation part calculates the evaluation index on the basis of an analysis result of the image captured by the imaging part in addition to the measurement result obtained by the measurement part.

In the present invention, the evaluation index for the individual plant is calculated with additionally taking into account the result obtained by analyzing the image of the plant captured in the inside of the cultivation container. Here, as for the imaging range, each plant may be image-captured one by one. However, a configuration that a plurality of plants are image-captured at once is efficient and hence preferable. By virtue of the analysis of the image, the raising state is allowed to be evaluated, for example, on the basis of the size and the shape of the plant.

The cultivation system according to the present invention is characterized in that the conveying machine conveys the same cultivation container to the inspection part plural times within 24 hours, wherein the inspection part further comprises a circadian rhythm calculation part calculating an amplitude or a period of circadian rhythm of each of the plurality of plants on the basis of time-series measurement results of plural times obtained by the measurement part, and wherein the calculation part calculates the evaluation index with additionally taking into account the period information calculated by the circadian rhythm calculation part.

In the present invention, inspection of plural times per day is performed on the same individual plant and, consequently, the amplitude or the period of the circadian rhythm is calculated. Then, at the time of seedling sorting of the mass-produced plants, evaluation of the individual plant is performed on the basis of the circadian rhythm in addition to the one-time inspection. This improves the accuracy of prediction as a superior seedling and hence allows quality improvement and quality equalization.

The cultivation system according to the present invention is characterized in that the cultivation container further comprises: a first wireless communication part receiving information from an apparatus located within a given area by wireless communication; and a writing part writing into the recording medium the information received by the first wireless communication part, and wherein the recording part comprises a second wireless communication part transmitting information to an apparatus located within a given area by wireless communication, whereby the inspection result obtained by the inspection part is transmitted from the second wireless communication part to the first wireless communication part.

In the present invention, the information concerning the inspection results of the plurality of plants is transmitted to the cultivation container by wireless communication and then recorded into the recording medium. As such, since the information is transmitted and received in a non-contact manner, a large amount of information is allowed to be rapidly transmitted and received in a state that a stress to the plants is reduced.

The cultivation system according to the present invention further comprises a transplanting part, on the basis of the inspection result obtained by the inspection part, transplanting the plant accommodated in the cultivation container to another cultivation container.

In the present invention, the plant accommodated in the cultivation container is transplanted to another cultivation container on the basis of the inspection result. As such, even transplanting based on the inspection result is executed within the cultivation system and hence the productivity is improved further.

The cultivation system according to the present invention is characterized in that the transplanting part further comprises a third recording part transcribing the inspection result obtained by the inspection part onto said another cultivation container of transplant destination.

In the present invention, the inspection result is transcribed into the storage medium provided in said another cultivation container of transplant destination. By virtue of this, the information concerning the inspection result at the time of sorting of the plant is continuously held in the plant even after the sorting. Since the correspondence between the growth result of the plant posterior to the sorting and the information at the time of seedling sorting is allowed to be recorded, this configuration is useful in quality improvement in the plant factory.

[Advantageous Effects]

According to the present invention, in mass cultivation employing a multi-stage shelf, individual plants are identified individually and then the inspection result of each individual plant is recorded into the recording medium of the cultivation container. Since the information concerning each of the plurality of plants is recorded in an individually identifiable manner, quality improvement and quality equalization as well as cost suppression of the plants in the mass cultivation are allowed to be realized. Further, inspection of plural times per day and sorting based on the inspection result are allowed to be automated and hence quality improvement and cost suppression are allowed to be advanced.

[Brief Description of the Drawings]

FIG. 1 is a perspective view illustrating an example of a cultivation unit accommodating a plant in Embodiment 1.
FIG. 2 is a perspective view of a cultivation apparatus constituting a cultivation system in Embodiment 1.
FIG. 3 is a front view of a cultivation apparatus constituting a cultivation system in Embodiment 1.
FIG. 4 is a side view of a cultivation apparatus constituting a cultivation system in Embodiment 1.
FIG. 5 is a top view of a cultivation apparatus constituting a cultivation system in Embodiment 1.
FIG. 6 is a block diagram illustrating configurations of a control device and a control terminal device of a cultivation system.
FIG. 7A is a flow chart illustrating an example of a processing procedure executed by a cultivation system in Embodiment 1.
FIG. 7B is a flow chart illustrating an example of a processing procedure executed by a cultivation system in Embodiment 1.

FIG. 8 is a graph illustrating an example of a time course of a chlorophyll fluorescence intensity of a plant.

FIG. 9 is a graph illustrating an example of a relation between the number of times of measurement and a correlation coefficient.

FIG. 10A is a histogram illustrating a distribution of a determination coefficient obtained when straight line approximation and sine wave approximation are applied to a time course illustrated in FIG. 8.

FIG. 10B is a histogram illustrating a distribution of a determination coefficient obtained when straight line approximation and sine wave approximation are applied to a time course illustrated in FIG. 8.

FIG. 11 is a perspective view illustrating an example of a cultivation pallet used in seedling sorting in Embodiment 2.

FIG. 12 is a block diagram illustrating a configuration of a cultivation system in Embodiment 2.

FIG. 13 is a flow chart illustrating an example of a processing procedure executed by a transplanting part in Embodiment 2.

[Modes for Carrying out the Invention]

The present invention is described below in detail with reference to the drawings illustrating the embodiments thereof.

Here, the embodiments given below are illustrative and therefore the present invention is not limited to the configurations given in the embodiments.

(Embodiment 1)

The cultivation system in Embodiment 1 described below is utilized in the process of greening among the processes of seeding, sprouting, greening, seedling sorting, seedling raising, seedling transplant, cultivation, and harvesting performed in a plant factory. The process of greening is a process that after a container where seeding has been performed is kept in a dark room for two days so that sprouting is achieved, the container is kept in a greening room for four days so that light is projected onto the buds in the greening room and thereby greening is achieved.

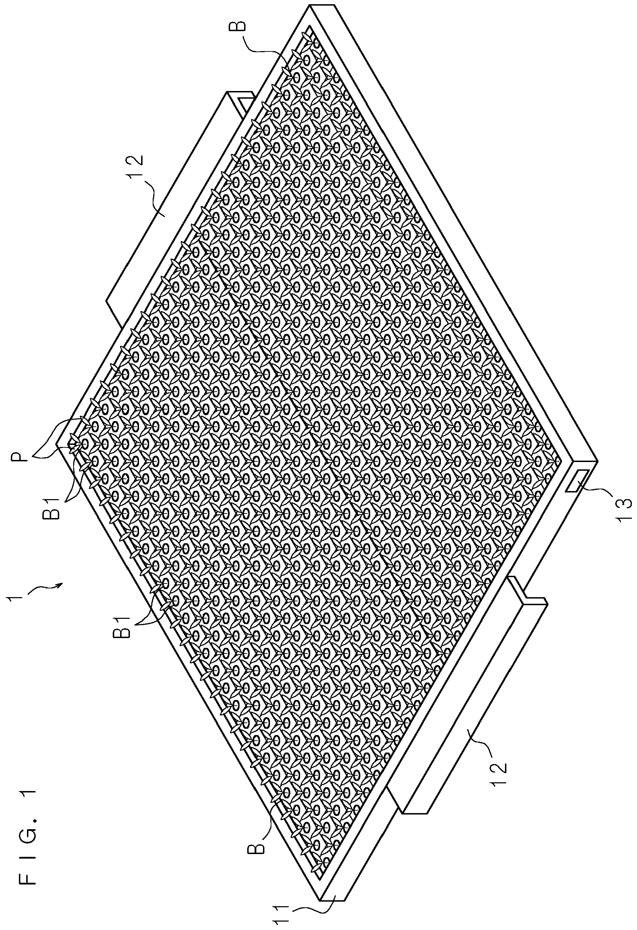

First, a cultivation unit accommodating the seedlings of plants P is described below. FIG. 1 is a perspective view illustrating an example of a cultivation unit 1 accommodating the plants P in Embodiment 1. The cultivation unit 1 is constructed from: the plants P; cultivation media B for growing the plants P; and a cultivation tray 11 accommodating two sets of the plants P and the cultivation media B in an aligned manner with each other.

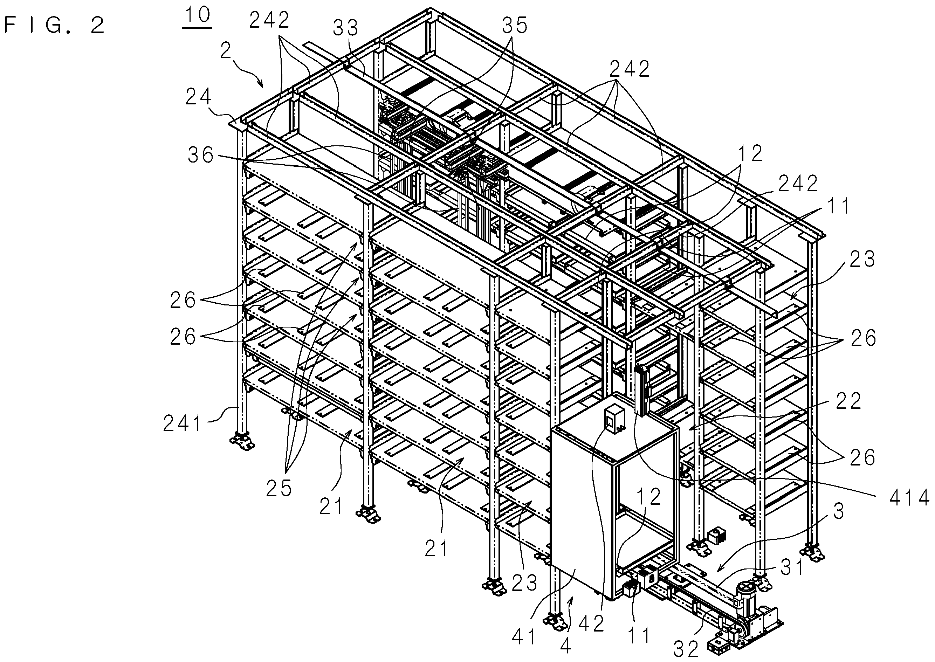

The cultivation tray 11 is a rectangle tray constructed from a metal, resin, or the like material. The cultivation tray 11 includes handle parts 12 each having an L-shaped cross section and provided such as to protrude outward from each short side. Further, the back face of the cultivation tray 11 is provided with metal fittings (not illustrated) arranged along the long sides in correspondence to guide rails 26 (see FIG. 2). An RF tag 13 is provided on a side face on one short side of the cultivation tray 11. For example, the RF tag 13 is a passive type tag and allowed to record identification information of the plants P and later-described inspection results of the individual plants P.

For example, the cultivation medium B is fabricated from urethane and has a flat plate shape. The cultivation medium B is partitioned into a plurality of seedbed portions aligned in plural rows in the longitudinal and the transverse direction. Then, a hole B1 is provided in each seedbed portion. For example, the size of the cultivation medium B is $600 \times 300$ mm and then partitioned into 300 seedbed portions so that 300 holes B1 are provided. Thus, 300 seedlings of the plants P are raised per one cultivation medium B. The perspective view of FIG. 1 illustrates a situation that the seeds of the plants P have been put in the individual holes B1 in the seeding process and then the cotyledons of the plants P have appeared from the holes B1 after the sprouting process.

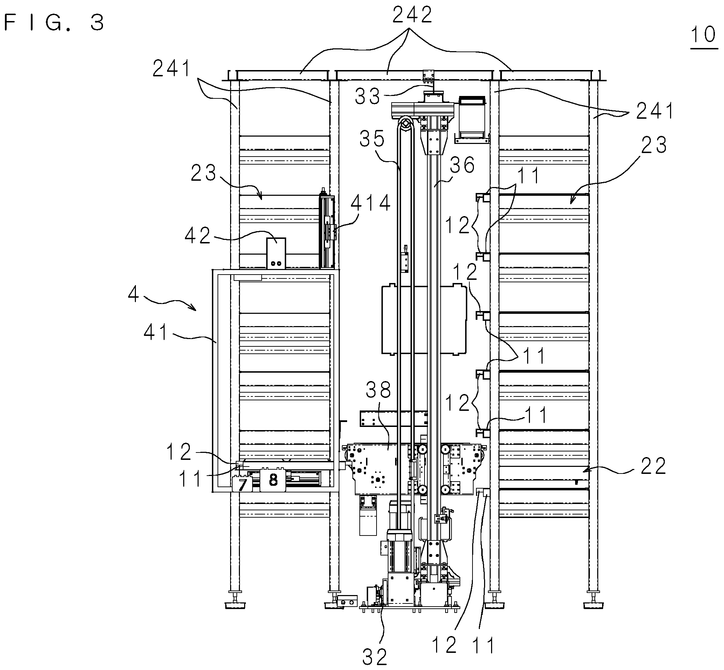

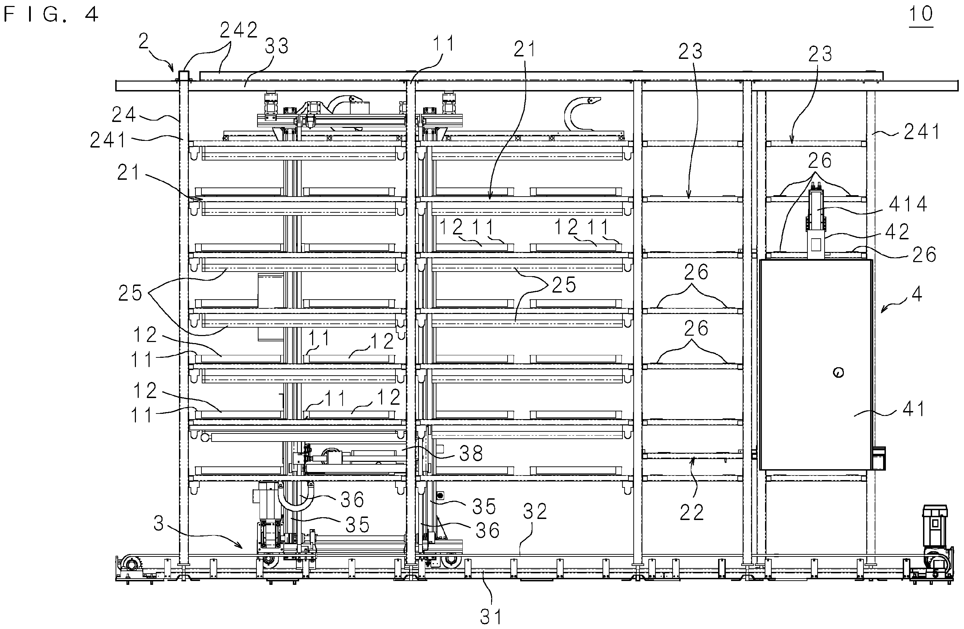

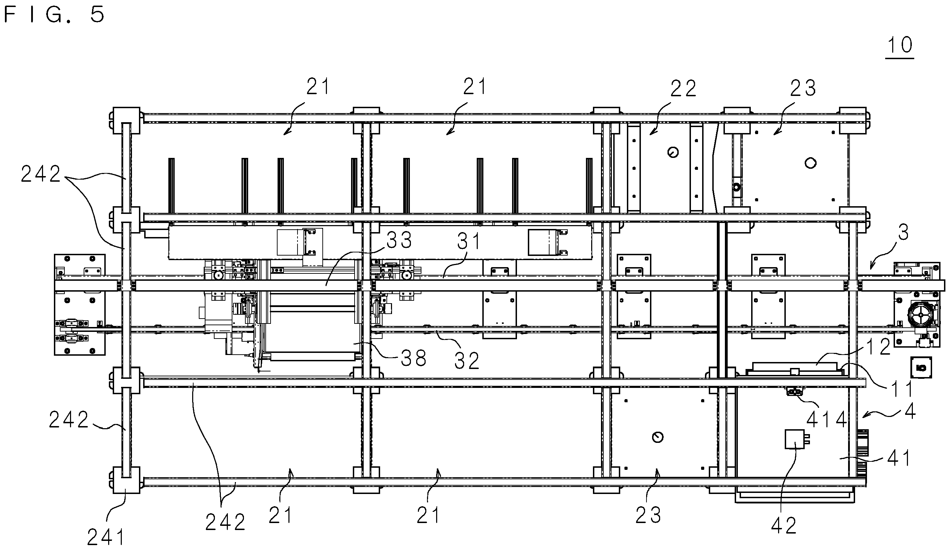

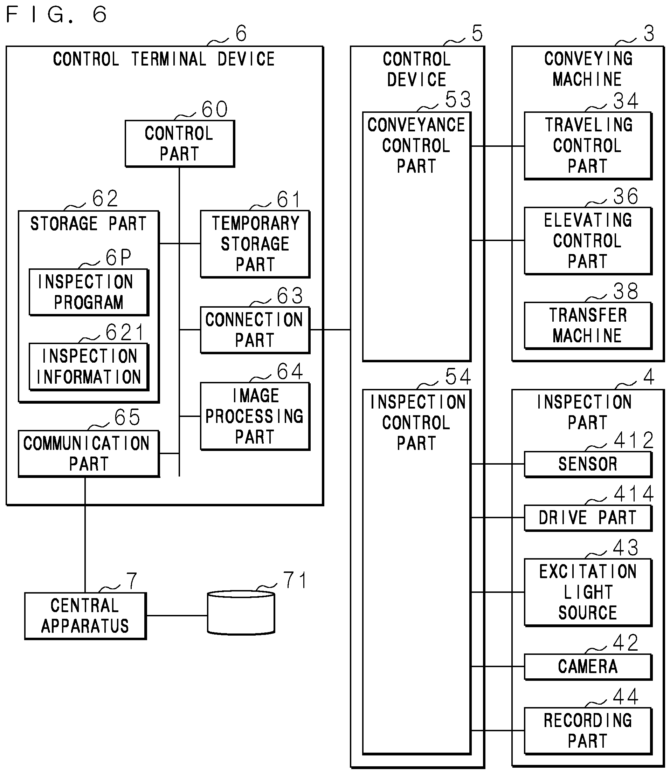

Next, a cultivation system automatically realizing the greening process in a greening room in the plant factory is described below. FIG. 2 is a perspective view of a cultivation apparatus 10 constituting the cultivation system in Embodiment 1. FIG. 3 is a front view of the cultivation apparatus 10. FIG. 4 is a side view of the cultivation apparatus 10. FIG. 5 is a top view of the cultivation apparatus 10. FIG. 6 is a block diagram illustrating the configurations of a control device 5 and a control terminal device 6 of the cultivation system.

The cultivation system is constructed from: the cultivation apparatus 10 including a cultivation shelf 2, a conveying machine 3, and an inspection part 4; and the control device 5 and the control terminal device 6 controlling the operation of the conveying machine 3 and the inspection part 4.

First, the individual constituting parts of the cultivation apparatus 10 are described below with reference to FIGS. 2 to 5. The cultivation shelf 2 is constructed from: accommodation shelves 21; shipping/arrival shelves 22; buffer shelves 23; and a supporting member 24 formed by supporting rods 241 and horizontal bridging materials 242 supporting the shelf boards of the accommodation shelves 21, the shipping/arrival shelves 22, and the buffer shelves 23.

The accommodation shelf 21 is a shelf accommodating the cultivation unit 1. The accommodation shelf 21 is constructed from a plurality of shelf boards fabricated from rectangular metal plates. The shelf board of the accommodation shelf 21 has a size that allows two cultivation trays 11 of the cultivation unit 1 to be placed thereon in a state of being aligned with each other. The accommodation shelf 21 is constructed such that the individual shelf boards are arranged in plural stages (e.g., six stages) at given intervals in the up and down directions and then a top plate is further stacked thereon. Two pairs of guide rails 26 corresponding to the metal fittings of the cultivation tray 11 are provided on one face (the upper face) of each shelf board of the accommodation shelf 21. A light source 25 employing a white light diode or a fluorescent lamp and oriented downward is arranged on the lower face of each shelf board and the top plate except for the bottommost shelf board of the accommodation shelf 21.

The shipping/arrival shelf 22 is a shelf used for shipping/arrival of the cultivation unit 1 to or from the cultivation apparatus 10. The shipping/arrival shelf 22 is constructed from one or two shelf boards fabricated from a rectangular metal plate. The shelf board of the shipping/arrival shelf 22 has a size that allows one cultivation tray 11 of the cultivation unit 1 to be placed thereon. One pair of guide rails 26 corresponding to the metal fittings of the cultivation tray 11 are provided on one face (the upper face) of the shelf board of the shipping/arrival shelf 22.

The buffer shelf 23 is a shelf temporarily accommodating the cultivation unit 1 at the time of transfer of the cultivation unit 1. The buffer shelf 23 is constructed from a plurality of shelf boards fabricated from rectangular metal plates. The shelf board of the buffer shelf 23 has a size that allows one cultivation tray 11 of the cultivation unit 1 to be placed thereon. Similarly to the accommodation shelf 21, the buffer shelf 23 is constructed such that the individual shelf boards are stacked in plural stages (e.g., six stages) at given intervals in the up and down directions and then a top plate is further stacked thereon. One pair of guide rails 26 corresponding to the metal fittings of the cultivation tray 11 are provided on one face (the upper face) of each shelf board of the buffer shelf 23.

The cultivation shelf 2 is constructed as follows.

Two accommodation shelves 21 are aligned such as to form a cascade of two in the longitudinal direction and then such accommodation shelves 21 forming a cascade of two are further arranged in two rows in the shorter-side direction with a given interval in between. The shipping/arrival shelf 22 is arranged adjacent to one row (referred to as the first row, hereinafter) of the two rows of the accommodation shelf 21 groups in the cascade direction. The buffer shelf 23 is arranged at each of two positions consisting of: a position further adjacent to the accommodation shelf 21 group on the first row side and to the shipping/arrival shelf 22; and a position adjacent to the accommodation shelf 21 group in the other row (referred to as the second row, hereinafter) and opposing the shipping/arrival shelf 22. The accommodation shelf 21, the shipping/arrival shelf 22, and the buffer shelf 23 are individually supported by the supporting rods 241 fixed to the floor of the greening room of the plant factory and by the plurality of horizontal bridging materials 242 linking together the upper portions of the plurality of supporting rods 241.

In the cultivation shelf 2 having this configuration, the six stages of accommodation shelves 21 illustrated in FIGS. 2 to 5 are allowed to accommodate 48 cultivation trays 11 accommodating the plants P. One cultivation tray 11 accommodates two sets of the plants P and the cultivation media B, i.e., $2\times300=600$ plants. Thus, the entirety of the accommodation shelf 21 is allowed to accommodate 28,800 plants P in total.

The conveying machine 3 is an apparatus automatically conveying the cultivation unit 1 to and from the accommodation shelf 21, the shipping/arrival shelf 22, and the buffer shelf 23 of the cultivation shelf 2 and the inspection part 4. The conveying machine 3 is arranged in the interval between the two rows of the accommodation shelf 21 groups, the shipping/arrival shelves 22, and the buffer shelves 23 arranged opposite to each other with a given interval in between.

The conveying machine 3 is constructed from a stacker crane. Specifically, the conveying machine 3 includes: a traveling rail 31 arranged on the floor between the rows of the cultivation shelves 2 in the row direction; a traveling belt (chain) 32; a traveling guide 33 provided in the row direction and fixed to the horizontal bridging material 242; a traveling control part 34; two elevating guides 35 vertically standing between the traveling guide 33 and the traveling rail 31; an elevating belt (chain) 36; an elevating control part 37; and a transfer machine 38.

The top face of the transfer machine 38 is provided with a placement surface 381 having a size that allows one cultivation tray 11 of the cultivation unit 1 to be placed thereon. In the transfer machine 38 an attachment of sliding type used for transferring the cultivation unit 1 to and from the accommodation shelf 21, the shipping/arrival shelf 22, and the buffer shelf 23 the cultivation shelf 2 and the inspection part 4 described later is provided on the placement surface 381. The attachment is constructed in a manner of permitting engagement with and removal from the handle parts 12 of the cultivation tray 11 of the cultivation unit 1.

When the traveling belt 32 is advanced by a driving force of a motor in response to the control of the traveling control part 34, the transfer machine 38 travels in the row direction in a manner of being guided by the traveling rail 31 and the traveling guide 33. Further, when the elevating belt 36 is advanced by a driving force of a motor in response to the control of the elevating control part 37, the transfer machine 38 moves up and down in a manner of being guided by the elevating guides 35.

The inspection part 4 is an apparatus executing chlorophyll fluorescence measurement. The inspection part 4 is provided in close contact with to the second row of the buffer shelves 23 of the cultivation shelf 2 in the row direction. The inspection part 4 includes an inspection box 41 and a camera 42.

The inspection box 41 is a box having a substantially rectangular parallelepiped shape allowed to receive the cultivation unit 1. A shutter is provided on a face on the conveying machine 3 side among the side faces of the inspection box 41 and allowed to be opened and closed by a drive part 414. When the shutter is closed, the inside of the inspection box 41 is allowed to be darken. Here, FIGS. 2 to 5 are illustrated in a state that the inspection box 41 is opened in order that the inside may be seen. However, it is sufficient that the opened faces are covered with a black cloth or the like.

The camera 42 is implemented by a cooling type CCD (Charge Coupled Device) camera. The camera 42 is installed in an upper portion of the inspection box 41 and oriented toward the bottom face of the inspection box 41. The camera 42 captures an image of the plants P in the cultivation unit 1 accommodated in the inspection box 41 and then outputs an image signal. The image range of the camera 42 is set up such as to cover the entirety of the cultivation tray 11 placed on the bottom face of the inspection box 41 so that an image of the plurality (600) of the plants P can be captured at once.

Next, the control device 5 and the control terminal device 6 controlling the above-described constituting parts of the cultivation apparatus 10 are described below with reference to FIG. 6. As illustrated in FIG. 6, the control device 5 and the control terminal device 6 are connected together through an RS232C or LAN cable or the like so that transmission and reception of information are allowed. Here, in FIG. 6, among the constituting parts of the cultivation apparatus 10, only those controlled by the control device 5 are illustrated.

In the inspection part 4, a sensor 412, an excitation light source 43, and a recording part 44 are further provided in the inside of the inspection box 41.

The sensor 412 is a sensor sensing and outputting a situation that the cultivation tray 11 is placed on the bottom face of the inspection box 41.

The excitation light source 43 is a light source emitting light at given wavelengths (e.g., 450 nm and its vicinity) exciting the chlorophyll of the plants P. Specifically, a blue light-emitting diode is employed. The excitation light source 43 is installed such that light may be projected from the ceiling or the side wall of the inspection box 41 toward the bottom face. The excitation light source 43 is of PAM (Pulse Amplitude Modulation) type and the camera 42 may include a shutter corresponding to the PAM period.

The recoding part 44 is implemented by a reader writer corresponding to the RF tag 13. The recording part 44 reads from the RF tag 13 the identification information of the plants P accommodated in the cultivation tray 11 and writes the inspection results into the RF tag 13.

The control device 5 is implemented by a PLC (Programmable Logic Controller). The control device 5 includes a conveyance control part 53 controlling the conveying machine 3 and an inspection control part 54 controlling the individual constituting parts of the inspection part 4.

On the basis of a schedule set up in advance, every day, the conveyance control part 53 controls: extraction of the cultivation unit 1 from the shipping/arrival shelf 22; placement of the cultivation unit 1 extracted from the shipping/arrival shelf 22 onto any one of the accommodation shelves 21; extraction of the cultivation unit 1 from any one of the accommodation shelves 21; introduction or extraction of the cultivation unit 1 into or from the inspection part 4; and placement of the cultivation unit 1 onto the accommodation shelf 21, the shipping/arrival shelf 22, or the buffer shelf 23.

On the basis of a procedure set up in advance, the inspection control part 54 performs control such that if the sensor 412 has sensed the placement of the cultivation tray 11 onto the bottom face of the inspection box 41, the recording part 44 obtains the identification information from the RF tag 13 of the cultivation tray 11 and the drive part 414 closes the shutter and then, after a given time concerning the adaptation to darkness has elapsed, the excitation light source 43 goes ON and then the camera 42 captures an image of the plants P. The inspection control part 54 outputs the identification information acquired from the RF tag 13 to the control terminal device 6. The inspection control part 54 continues outputting the image signal being obtained from the camera 42, to the control terminal device 6 for a given imaging period (e.g., 5 minutes). After the given imaging period has elapsed, the inspection control part 54 terminates the image acquisition by the camera 42. If image capturing of plural times per day for the same cultivation unit 1 has been completed, the inspection control part 54 outputs to the recording part 44 the inspection results transmitted from the control terminal device 6 and then the recording part 44 records the inspection results into the RF tag 13.

The control terminal device 6 is implemented by a PC (Personal Computer). The control terminal device 6 includes a control part 60, a temporary storage part 61, a storage part 62, a connection part 63, an image processing part 64, and a communication part 65. The control terminal device 6 may additionally include a display part and an operation part used for operation by an operator.

The control part 60 is implemented by a CPU. The control part 60 reads and executes an inspection program 6P stored in the storage part 62 so as to cause the PC to operate as the control terminal device 6. Details of the processing by the control part 60 are described later. The temporary storage part 61 is constructed from a RAM such as a DRAM (Dynamic Random Access Memory) and an SRAM (Static RAM) and temporarily stores information generated in the processing of the control part 60.

The storage part 62 is implemented by an HDD (Hard Disk Drive). The inspection program 6P is stored in the storage part 62. On the basis of the inspection program 6P stored in the storage part 62, the control part 60 executes the processing of calculating a numerical value expressing the superiority for each individual plant P by using the image of the plants P obtained under the excitation light source 43. Inspection information 621 obtained as the results of the above-described arithmetic processing is stored into the storage part 62.

The connection part 63 is an interface connected to the control device 5. As described above, the control device 5 and the control terminal device 6 are connected together through an RS232C or LAN cable or the like. The connection part 63 serves as an interface therefor and may have an arbitrary configuration. The connection between the control device 5 and the control terminal device 6 may be achieved by wireless communication. The control part 60 is allowed to transmit and receive information to and from the control device 5 through the connection part 63.

The image processing part 64 performs the processing of filtering, edge detection, and the like on the image acquired by the camera 42 of the inspection part 4. The image processing part 64 may be implemented by software.

The communication part 65 is a communication interface connected to a central apparatus 7 in a manner of permitting communication. The central apparatus 7 is an apparatus storing information in the individual processes of the entire plant factory and thereby performing control. The central apparatus 7 includes a large capacity recorder 71 built in or provided in the outside. Various kinds of information in the individual processes is allowed to be recorded into the recorder 71 and the information is allowed to be acquired from the recorder 71. The control part 60 transmits inspection results through the communication part 65 to the central apparatus 7 and receives information from the central apparatus 7.

In the control terminal device 6, the control part 60 executes arithmetic processing concerning the chlorophyll fluorescence measurement on the basis of the identification information and the image signal transmitted from the inspection control part 54 in the control device 5. Specifically, by using the image processing part 64 on the basis of the image signal having been transmitted, the control part 60 specifies the size and the shape of each individual plant P and calculates the intensity of delayed fluorescence (e.g., during a time interval of 4 to 30 seconds after the excitation light projection) concerning the chlorophyll fluorescence. Here, the control part 60 may derive an induction curve. The control part 60 establishes the correspondence between the received identification information and the derived and calculated inspection result and then stores the data into the storage part 62. The control part 60 performs the measurement plural times per day on the same individual and then, on the basis of the measurement results of plural times, calculates the amplitudes and the periods of the circadian rhythms concerning the size, the shape, and the chlorophyll fluorescence intensity. Further, the control part 60 calculates an evaluation index for the seedling by a method that the size, the shape, and the chlorophyll fluorescence intensity and the amplitudes and the periods of these circadian rhythms having been calculated are applied to a given evaluation function. The evaluation index may be a numerical value expressing the superiority or inferiority or, alternatively, may be a symbol indicating the success or failure or a character indicating a rank. The evaluation function is set forth by Bayesian statistics or machine learning (a neural network). The control part 60 transmits the numerical value corresponding to the evaluation index calculated for each individual plant, to the control device 5 together with the identification information. Then, the data is recorded from the inspection control part 54 of the control device 5 through the recording part 44 into the RF tag 13.

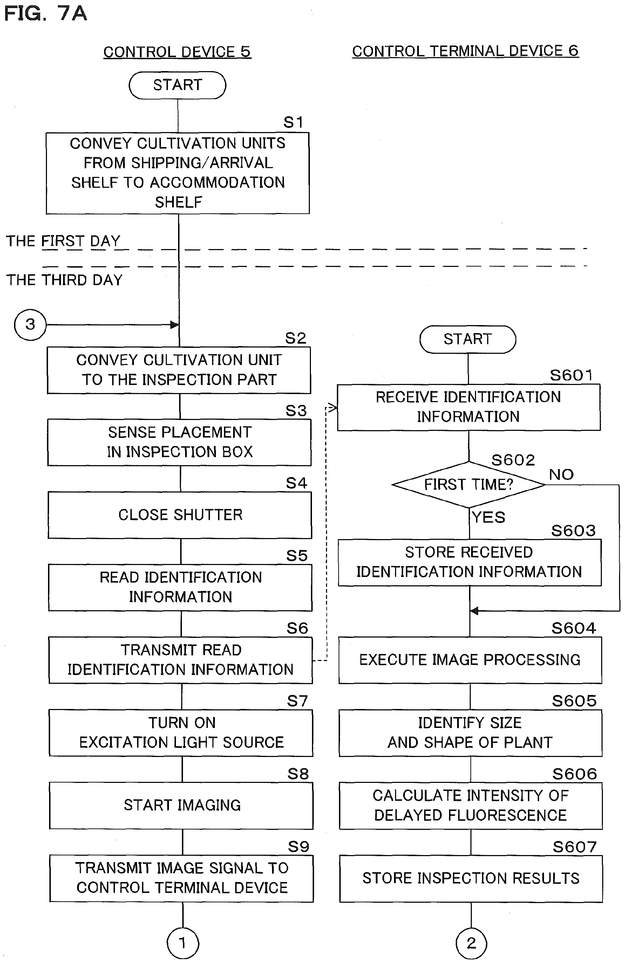

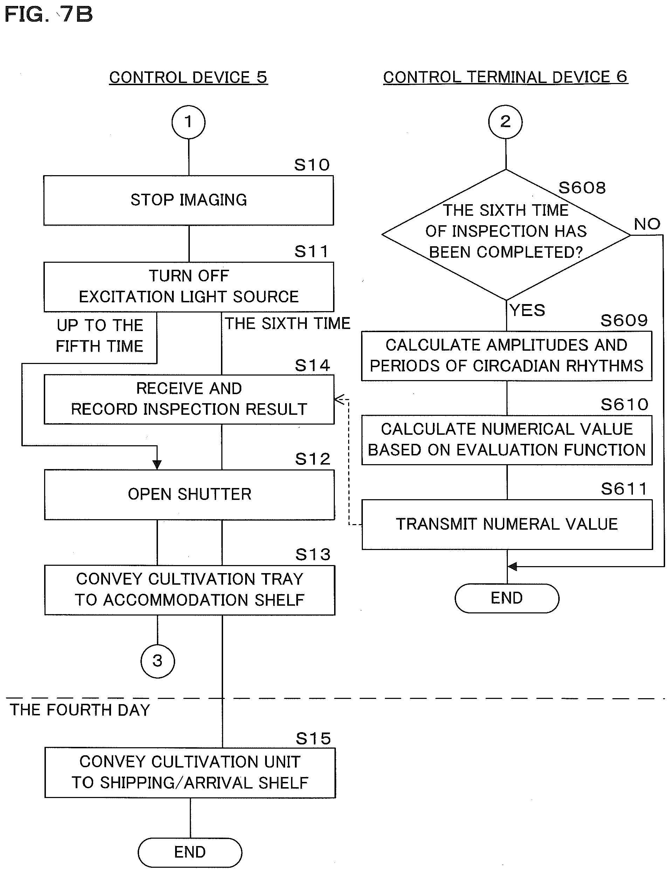

The process of greening of the seedling performed by the cultivation system having this configuration is described below in detail with reference to a flow chart. FIGS. 7A and 7B are a flow chart illustrating an example of the processing procedure executed by the cultivation system in Embodiment 1.

The following processing is started every day and executed in a four-day cycle by cooperation between the control part 60 based on the inspection program 6P stored in the storage part of the control terminal device and the control device 5 based on a given program.

After the sprouting process has been performed in the dark room for two days after the seeding, the cultivation units 1 are successively placed onto the shipping/arrival shelf 22 by another automatic conveying machine (not illustrated). At that time, the identification information of the plurality (600) of plants P accommodate in the cultivation unit 1 is stored in advance in the RF tag 13 of the cultivation unit 1. Here, the number of cultivation units 1 put into the cultivation apparatus 10 after the sprouting process is 12 pieces/day.

On the basis of a given schedule, the conveyance control part 53 of the control device 5 conveys the plurality of cultivation units 1 successively placed on the shipping/arrival shelf 22, to a position of the accommodation shelf 21 set forth in advance (step S1).

At step S1, twelve cultivation units 1 per day are successively placed onto the accommodation shelf 21 and then the greening process is started in which a light energy and a light quality from the light source 25 are supplied to the plants P. The greening is advanced intact on the accommodation shelf 21 until the end of the third day of the greening process. In each day of the greening process, control is performed such that the light source 25 is kept OFF from 0:00 at midnight to 12:00 and the light source 25 is kept ON from 12:00 to 24:00. Then, within a day at the fourth day of the greening process, the following processing is executed.

On the basis of a given schedule, the conveyance control part 53 of the control device 5 pulls in the cultivation unit 1 from the accommodation shelf 21 to the transfer machine 38 and then conveys the cultivation unit 1 to the inspection part 4 (step S2).

If the cultivation unit 1 conveyed to the inspection part 4 is placed on the bottom face of the inspection box 41, the sensor 412 senses the placement as a result of the processing in the inspection control part 54 (step S3). Then, the drive part 414 closes the shutter (step S4).

In the inside of the inspection box 41 brought into a dark box state when the shutter has been closed, first, the inspection control part 54 causes the recording part 44 to read the identification information in the RF tag 13 (step S5) and then transmits the identification information to the control terminal device 6 (step S6). The inspection control part 54 turns ON the excitation light source 43 (step S7), then starts up the camera 42 so as to start imaging the plants P (step S8), and then continues transmitting the image signal obtained from the camera 42, to the control terminal device 6 for a given time such as 5 minutes (step S9).

In response to each occasion that the inspection control part 54 causes the inspection part 4 to start inspection, at each time of the inspection, the control terminal device 6 executes the following processing.

The control part 60 receives the identification information and the image signal from the control device 5 (step S601) and then determines whether it is the first time for the received identification information (step S602). If it is the first time (S602: YES), the control part 60 stores the received identification information (step S603). If it is not the first time (S602: NO), the control part 60 skips the processing of step S603 and advances the processing to the subsequent step S604.

The control part 60 executes image processing onto the received image signal (step S604). From the image based on the image signal, the control part 60 identifies the size and the shape of each individual plant P corresponding to the received identification information (step S605) and then calculates the intensity of delayed fluorescence concerning the chlorophyll fluorescence (step S606).

Specifically, at step S606, the control part 60 sorts the images captured in time series, into correspondence to each of the 600 individual plants P and then calculates the intensity of delayed fluorescence on the basis of changes in the luminance and the color at each portion.

The control part 60 stores the inspection results into the storage part 62 in correspondence to the identification information of each individual plant P (step S607) and then determines whether six times of inspection has been completed for the present cultivation unit 1 under inspection (step S608). If it is determined that six times of inspection is not yet completed (S608: NO), the control part 60 terminates the single inspection processing of the present time.

After the given time has elapsed, the inspection control part 54 of the control device 5 stop imaging by the camera 42 (step S10) and then turns OFF the excitation light source 43 (step S11). Until the end of the fifth inspection, the inspection control part 54 opens by the drive part 414 (step S12).

When the shutter has been opened, the conveyance control part 53 of the control device 5 pulls in the cultivation tray 11 of the cultivation unit 1 whose inspection has been completed, into the transfer machine 38 and then conveys and returns the cultivation tray 11 to the accommodation shelf 21 (step S13).

On the basis of a given schedule, the conveyance control part 53 and the inspection control part 54 of the control device 5 repeats: conveyance to the inspection part 4 for the purpose of inspection in the inspection part 4; the inspection processing; and accommodation to the accommodation shelf 21 (S2 to S13), six times per day for the same cultivation unit 1. At each time of the inspection in the inspection part 4, the control part 60 of the control terminal device 6 executes the processing of steps S601 to S608.

At the sixth time of inspection, the control part 60 of the control terminal device 6 at step S608 determines that the sixth time of inspection has been completed (S608: YES). Then, the control part 60 calculates the amplitudes and the periods of the circadian rhythms concerning the size, the shape, and the chlorophyll fluorescence intensity of each individual plant P obtained by the total of six times of inspection (step S609). The control part 60 calculates the evaluation index for each of the plurality of plants P accommodated in the cultivation unit 1 by a method that the size, the shape, and the chlorophyll fluorescence intensity and the amplitudes and the periods of these circadian rhythms having been calculated are applied to a predetermined evaluation function (step S610). The control part 60 transmits a numerical value corresponding to the calculated evaluation index, to the control device 5 together with the corresponding identification information (step S611) and then terminates the processing of inspection.

At the sixth time of inspection, after turning OFF the excitation light source 43 at step S11, the inspection control part 54 of the control device 5 receives the numerical value and the identification information transmitted from the control terminal device 6, and then records the data through the recording part 44 into the RF tag 13 (step S14). After that, the inspection control part 54 causes the drive part 414 to open the shutter (S12). By virtue of this, the evaluation index for each of the plurality of the individual plants P obtained by the six times of inspection is recorded into the RF tag 13 of the cultivation tray 11.

At the end of the final day (the fourth day) of the greening process, the following processing is executed.

On the basis of a given schedule, the conveyance control part 53 of the control device 5 pulls in the cultivation unit 1 from the accommodation shelf 21 to the transfer machine 38 and then conveys the cultivation unit 1 to the shipping/arrival shelf 22 (step S15). At that time, the cultivation units 1 are successively conveyed from the shipping/arrival shelf 22 to another seedling sorting unit by another automatic conveying machine. The conveyance control part 53 performs the processing of S15 for 12 pieces per day. By virtue of this, 12 pieces per day of the cultivation units 1 whose greening process and inspection have been completed are conveyed out from the cultivation apparatus 10.

Further details of the calculation of the evaluation index at step S610 are described below. As described for steps S601 to S609, in Embodiment 1, a configuration has been employed that the control part 60 performs six times of inspection per day so as to calculates the amplitude and the period of the circadian rhythm. This is because a periodicity is recognized in the chlorophyll fluorescence intensity of the plant P and then, when the amplitude and the period are identified, the correlation coefficient with the growth result of the plant P is improved.

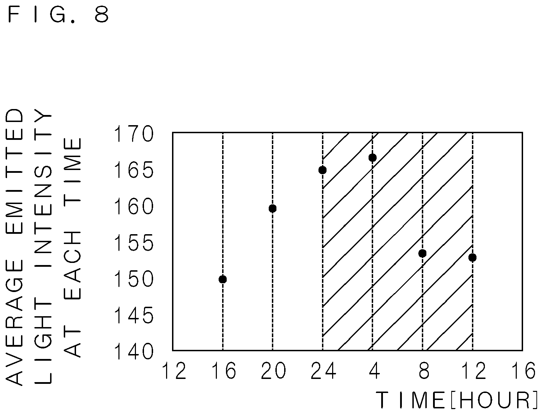

FIG. 8 is a graph illustrating an example of a time course of the chlorophyll fluorescence intensity of the plant P. In the graph of FIG. 8, the horizontal axis indicates the time of day (o'clock) and the vertical axis indicates the average emitted light intensity at each time of day. The average emitted light intensity indicates the average of the delayed fluorescence intensities obtained from the plurality of plants P having been observed. Further, the duration of shaded region in FIG. 8 indicates that the light source 25 is kept OFF. As seen from FIG. 8, a periodicity is recognized in the emitted chlorophyll fluorescence intensity. Thus, for example, in a case that the delayed fluorescence intensity is measured once a day, a variation is expected in the measurement result depending on which time of day the measurement is performed at. Actually, after the greening process, plural times of measurement were performed on the plurality of plants P, then hydroponics was performed for 14 days, then the raw weights were measured, and then correlation between the measurement result at each time point and the raw weight after the growth was acquired. As a result, the average emitted light intensity measured at 4:00 in the morning (at the time that 4 hours has elapsed after the light was turned OFF) had a correlation coefficient of 0.650 with the average raw weight. However, various values were obtained depending on the time of day as follows.

| Time of day | Correlation coefficient |
|---|---|
| 16:00 | 0.540 |
| 20:00 | 0.593 |
| 24:00 (OFF light) | 0.590 |
| 4:00 | 0.650 |
| 8:00 | 0.619 |
| 12:00 (ON light) | 0.617 |

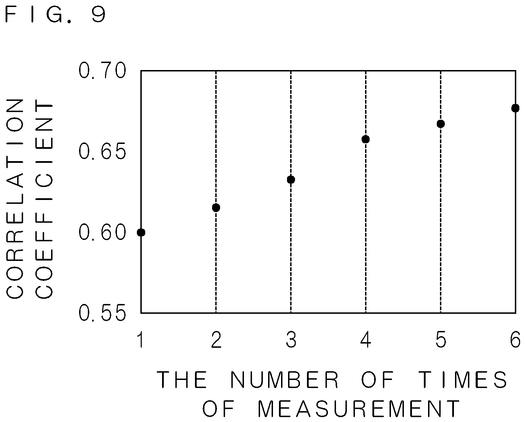

Here, correlation between the average of the measurement results of plural times of the delayed fluorescence intensity and the raw weight was acquired as a function of the number of times. Then, it has been found that the correlation coefficient increases with increasing number of times of measurement. FIG. 9 is a graph illustrating an example of the relation between the number of times of measurement and the correlation coefficient. In the graph of FIG. 9, the horizontal axis indicates the number of times of measurement and the vertical axis indicates the correlation coefficient. The correlation coefficient between the average of the measurement result and the average raw weight was 0.602 in a case that the number of times of measurement was 1. The correlation coefficient was 0.615 in a case of 2. The correlation coefficient was 0.633 in a case of 3. The correlation coefficient was 0.658 in a case of 4. The correlation coefficient was 0.667 in a case of 5. The correlation coefficient was 0.677 in a case of 6. As such, when the evaluation index is calculated from the average of the delayed fluorescence intensities obtained by plural times of measurement, a higher correlation with the raw weight of the seedling which is the growth result is obtained than in the case that the evaluation is performed on the basis of the delayed fluorescence intensity obtained by one time of measurement. Thus, seedlings having grown satisfactory are allowed to be sorted out.

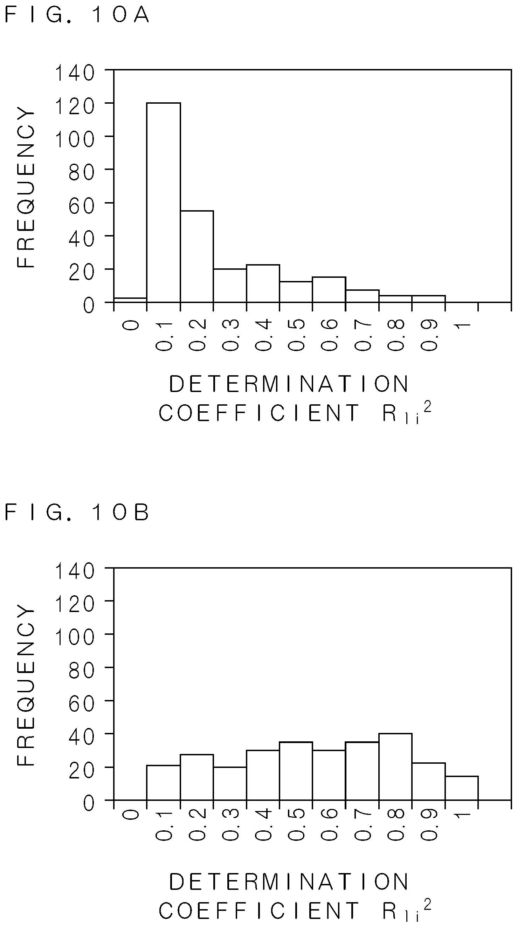

Further, in Embodiment 1, the control part 60 calculates the amplitude and the period of the time course by applying sine wave approximation to the time course of the delayed fluorescence intensities of plural times illustrated in FIG. 8. FIG. 10 illustrates histograms illustrating distributions of the determination coefficient obtained when straight line approximation and sine wave approximation were applied to the time course illustrated in FIG. 8. The histogram of FIG. 10A illustrates the frequency distribution of the square of the determination coefficient $R_{li}$ obtained by straight line approximation. The histogram of FIG. 10B illustrates the frequency distribution of the square of the determination coefficient $R_{nli}$ obtained by sine wave approximation. The average of the square of the determination coefficient $R_{li}$ obtained by straight line approximation was 0.18 and the average of the square of the determination coefficient $R_{nli}$ obtained by sine wave approximation was 0.50. Thus, the sine wave approximation is more appropriate than the straight line approximation. Thus, in the control part 60, the measurement results of a total of six times of the delayed fluorescence intensity for the i-th plant P are approximated by the following Formula (1) so that optimal solutions for the amplitude $A_i$, the phase $\phi_i$, and the constant Li in Formula (1) and the determination coefficient $R_{nli}$ at that time are calculated.
[Math. 1]

$$y_i = A_i \sin\left(2\pi \frac{t}{24} + \varphi_i\right) + L_i \qquad \cdots \ (1)$$

The control part 60 applies the amplitude $A_i$, the phase $\phi_i$, the constant Li and the determination coefficient $R_{nli}$ having been obtained, into an evaluation function F described in Formula (2) so as to calculate the evaluation index $I_i$. The evaluation function F is obtained by machine learning in an artificial neural network on the basis of the relation between the raw weight measured as an actual growth result and the parameters $A_i$, $\phi_i$, $L_i$, and $R_{nli}$. Here, as seen from an actual measurement value, the correlation coefficient between the evaluation index $I_i$ and the raw weight is improved up to 0.74 in comparison with the correlation coefficient of 0.677 of a case of the average obtained from plural times of measurement.

[Math. 2]

$$I_i = F(L_i, A_i, R_{nl\,i}, \varphi_i) \qquad \cdots \ (2)$$

As such, in a case that the evaluation index is calculated after plural times of inspection are performed within 24 hours, the prediction accuracy in sorting out of seedlings grown satisfactory is allowed to be improved.

As described above, the plurality of cultivation units 1 corresponding to 7,200 plants are put into the cultivation apparatus 10 every day. Then, after the four-day greening process, the plurality of cultivation units 1 corresponding to 7,200 plants per day undergo inspection of plural times per day and are then conveyed to the apparatus concerning the next process of seedling sorting. Since the inspection results are recorded in the RF tag 13 of the cultivation tray 11, this another seedling sorting unit is allowed to perform seedling sorting on the basis of the evaluation indices serving as the inspection results.

This permits automatic execution of: mass production of the plants P at a daily production of several thousand plants; and inspection of several thousand plants P per day. Further, when the inspection is performed plural times per day, the accuracy of growth prediction based on the inspection results is also allowed to be improved. Thus, the present invention is allowed to realize mass production, quality improvement, and quality equalization.

In Embodiment 1, as illustrated in FIGS. 2 to 5, the cultivation shelf 2 had a configuration that six stages of the accommodation shelves 21 are arranged in "two rows" by "cascade of two". However, employable configurations are not limited to this and the accommodation shelf 21 groups in a number of several times may be employed as long as the processing is achievable. Alternatively, the cultivation system may include a plurality of such cultivation apparatuses 10 so that inspection and production of the plants in a number of several times may be realized.

In Embodiment 1, a configuration has been employed that the control device 5 and the control terminal device 6 in the control system are separately provided in the form of a PLC plus a PC. However, the function of the control terminal device 6 may be integrated into and executed by the control device 5. Further, the processing of the control terminal device 6 may be executed by the central apparatus 7.

(Embodiment 2)

In Embodiment 2, a configuration is employed that the cultivation apparatus 10 performs also the seedling sorting on the final day of the greening process.

The configuration of the cultivation system in Embodiment 2 is similar to that of the system in Embodiment 1 except for a configuration concerning a transplanting part concerning seedling sorting described below. Thus, like configurations are designated by like numerals and their detailed description is not given.

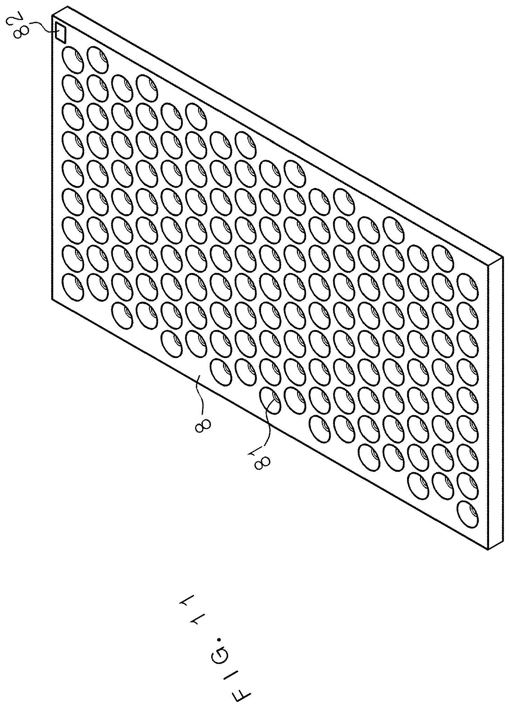

FIG. 11 is a perspective view illustrating an example of a cultivation pallet 8 used in seedling sorting in Embodiment 2. For example, the cultivation pallet 8 is fabricated from styrene foam and has a flat plate shape, in which holes 81 are provided in plural rows in the longitudinal and the transverse direction. Each hole 81 is constructed such that a seedbed portion obtained by cutting into pieces the cultivation medium B is allowed to be accommodated without a gap. Specifically, each hole 81 is somewhat smaller than the size of the seedbed portion and the diameter is reduced in a tapered shape so that the seedbed portion is allowed to be held reliably. For example, the size of the cultivation pallet 8 is 890×590 mm and approximately 150 holes 81 are provided. Then, the plant P is allowed to be raised in each hole 81. The cultivation pallet 8 is accommodated in another tray (not illustrated) in the plant factory. In the seedling raising process after the seedling sorting, the plant P is raised by virtue of a cultivation material (a liquid) for raising filled in the another tray.

The cultivation pallet 8 further includes an RF tag 82. The RF tag 82 is a tag of the same type as the RF tag 13 of the cultivation tray 11 and is allowed to record the identification information of the individual plants P planted in the individual holes 81 and the information concerning the individual plants P.

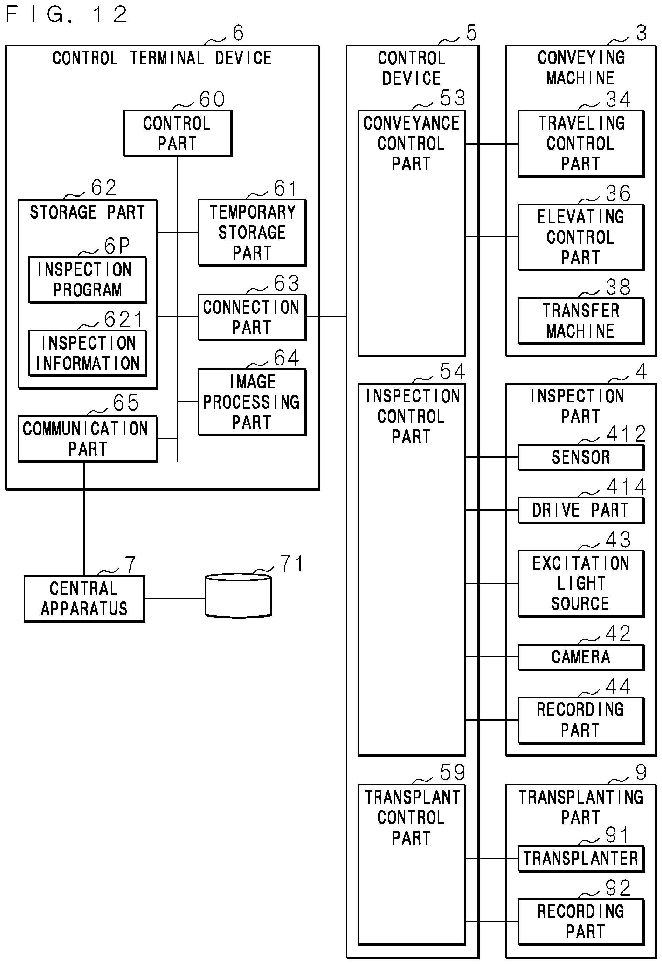

FIG. 12 is a block diagram illustrating the configuration of the cultivation system in Embodiment 2. The cultivation system of Embodiment 2 has a configuration that: the cultivation apparatus 10 further includes a transplanting part 9 transplanting the plants P together with the cultivation medium B from the cultivation tray 11 of the cultivation unit 1 to the cultivation pallet 8; and a transplant control part 59 controlling the operation of the transplanting part 9 is provided in the inside of the control device 5. For example, the transplanting part 9 is provided in the cultivation apparatus 10 and located adjacent to the inspection part 4.

The transplanting part 9 is provided with a transplanter 91 and a recording part 92.

For example, the transplanter 91 includes: a holding part horizontally holding individually the cultivation tray 11 and the cultivation pallet 8; and a mechanism cutting into seedbed portions the cultivation medium B accommodating the plants P and then putting the seedbed portions from the holding part of the cultivation tray 11 into the holes 81 of the cultivation pallet 8. Such mechanisms of transplanting in the transplanting part 9 may be implemented by various other configurations including the publicly known art.

The recording part 92 is implemented by a reader writer corresponding to the RF tag 13 of the cultivation tray 11 and the RF tag 82 of the cultivation pallet 8. The recording part 92 performs: reading of the identification information of the plants P accommodated in the cultivation tray 11 and numerical values corresponding to the evaluation indices from the RF tag 13; and transcription of the evaluation index into the RF tag 82.

The transplanting part 9 is controlled by the transplant control part 59 of the control device 5. The transplant control part 59 reads the identification information of the plants P accommodated in the cultivation tray 11 and the numerical values stored in correspondence to the identification information, from the cultivation tray 11 held at the holding part of the transplanter 91. Then on the basis of the read-out numerical values, the transplant control part 59 sorts out the plants P and then transplants the plants P into the cultivation pallet 8. For example, the transplant control part 59 performs control such that approximately 150 plants are sorted out from 300 plants of each cultivation medium B in descending order of the numerical values and then transplanted onto the cultivation pallet 8. At the same time, in cooperation with the conveyance control part 53 or by manual operation from an operator, the transplant control part 59 performs transplant from the cultivation medium B on the same cultivation tray 11 onto a different cultivation pallet 8 by using the buffer shelf 23. As a result, 7,200 seedlings of the plants P are sorted out into 5,000 seedlings. At the time of transplant of the plants P onto the cultivation pallet 8, the transplant control part 59 transcribes the evaluation indices serving as the inspection results obtained by the inspection part 4 into the RF tag 82 of the cultivation pallet 8 of transplant destination.

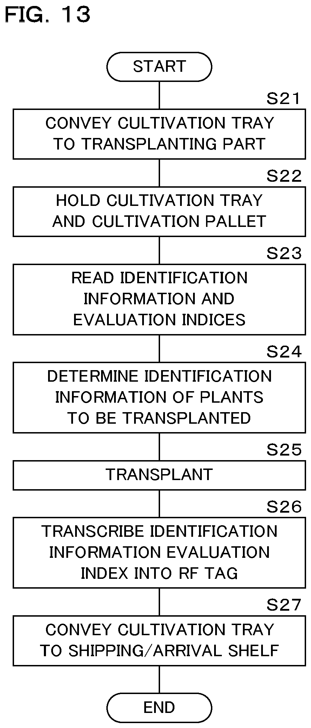

FIG. 13 is a flow chart illustrating an example of the processing procedure executed by the transplanting part 9 in Embodiment 2. The processing illustrated in the flow chart of FIG. 13 is executed in accordance with a given program by the control device 5 in place of the processing procedure (S15) of conveyance to the shipping/arrival shelf 22 on the fourth day illustrated in the flow chart of FIGS. 7A and 7B.

On the basis of a given schedule, the conveyance control part 53 of the control device 5 pulls in the cultivation tray 11 of the cultivation unit 1 from any one of the accommodation shelves 21 to the transfer machine 38 and then conveys the cultivation tray 11 to the transplanting part 9 (step S21).

In response to the control of the transplant control part 59, the transplanting part 9 holds the cultivation tray 11 and the cultivation pallet 8 having been conveyed (step S22). The transplant control part 59 causes the recording part 92 to read from the RF tag 13 the identification information and the evaluation indices of all of the plurality of plants P accommodated in the cultivation tray 11 (step S23).

On the basis of the identification information and the evaluation indices having been read, the transplant control part 59 determines the identification information of the plants P to be transplanted (step S24). At step S24, the transplant control part 59 determines the identification information related to an evaluation index corresponding to a numerical value exceeding a given value or an evaluation index corresponding to a numerical value equal to the given value.

The transplant control part 59 causes the transplanter 91 to transplant to the cultivation pallet 8 the plants P identified on the basis of the determined identification information (step S25). Then, at each time to transplant, the transplant control part 59 causes the recording part 92 to transcribe the identification information of the transplanted plant P and the evaluation index corresponding to the identification information, into the RF tag 82 of the cultivation pallet 8 (step S26).

If transplanting has been complete for all the plants P corresponding to the identification information determined by the transplant control part 59, the conveyance control part 53 pulls in the cultivation tray 11 to the transfer machine 38 and then conveys the cultivation tray 11 to the shipping/arrival shelf 22 (step S27). The cultivation pallet 8 on which the sorted-out plants P have been transplanted may be placed on another shipping port (not illustrated) by the transplanter 91 or, alternatively, may be carried manually by an operator to an apparatus concerning the subsequent process.

As such, on the basis of the evaluation indices of the inspection results, the plants P are individually transplanted from the cultivation tray 11 to the cultivation pallet 8. Even seedling sorting on the basis of the inspection results is executed within the cultivation apparatus 10. Thus, efficiency improvement is achieved and the productivity is improved. Further, the evaluation indices of the individual plants P are kept recorded even after the process has proceeded to the seedling raising process of the plants P. Thus, correspondence between the seedling raising result and the information at the time of seedling sorting is allowed to be established. The inspection results may be kept until the harvesting and then correspondence between the final growth result and the information at the time of seedling sorting may also be established. It is preferable that the correspondence between the growth result and the information concerning the inspection result at the time of seedling sorting is accumulated through the control terminal device 6 into the recorder 71 in the central apparatus 7. When the inspection results of 7,200 plants per day and the growth results of the individual plants P at a daily production of 5,000 plants are recorded, the data is allowed to be utilized in sequential learning of the evaluation function used in the applying to the evaluation function F at the time of inspection described in Embodiment 1 or, alternatively, allowed to be utilized in development of new inspection algorithms. By virtue of this, also the accuracy of seedling sorting is allowed to be improved. When the number of accommodation shelf 21 groups is increased into several times as described in Embodiment 1, the number times of inspection and the number of produced plants per day are allowed to be increased further.

A configuration may be employed that the transplanting part 9 described in Embodiment 2 is shared with the inspection part 4. At that time, the recording part 44 and the recording part 92 are allowed to be implemented by single hardware.

Here, the embodiments disclosed above are illustrative at all points and to be recognized as not restrictive. The scope of the present invention is set forth by the claims rather than the description given above. Further, the scope of the present is to be recognized as containing all changes made within the spirit and the scope of the claims.

DESCRIPTION OF REFERENCE NUMERALS

P    Plant
B    Cultivation medium
1    Cultivation unit
11    Cultivation tray
13    RF tag
10    Cultivation apparatus
2    Cultivation shelf
21    Accommodation shelf
22    Shipping/arrival shelf
23    Buffer shelf
25    Light source
26    Guide rail
3    Conveying machine
4    Inspection part
41    Inspection box
42    Camera
43    Excitation light source
44    Recording part
5    Control device
6    Control terminal device
60    Control part
62    Storage part
8    Cultivation pallet
9    Transplanting part
91    Transplanter
92    Recording part

**Claims**

1.   A cultivation system comprising: a plurality of cultivation containers each capable of accommodating a plant and a cultivation medium used for growing the plant and each provided with a recording medium recording identification information identifying the accommodated plant; a cultivation shelf provided with plural stages of shelf boards which are arranged at predetermined intervals and on which the cultivation containers are placed; a light source projecting greening light individually onto upper faces of the shelf boards; and a conveying machine conveying the cultivation container between the plurality of shelf boards, wherein

the cultivation container is capable of accommodating a plurality of plants and provided with a container-side recording part recording identification information individually identifying the plurality of accommodated plants, into the recording medium, and wherein

the cultivation system further comprises:

an inspection part provided with an accommodation part accommodating one or a plurality of the cultivation containers and inspecting individually the plurality of plants contained in the cultivation container accommodated in the accommodation part; and

a recording processing part recording an inspection result of each plant obtained by the inspection part, in correspondence to the identification information of the plurality of plants into the recording medium.

2. The cultivation system according to claim 1, wherein
the inspection part comprises:

a dark box accommodating the cultivation container accommodated in the accommodation part;
a measurement part executing chlorophyll fluorescence measurement in an inside of the dark box; and
a calculation part calculating an evaluation index for each of the plurality of plants on the basis of a measurement result obtained by the measurement part.

3. The cultivation system according to claim 2, wherein
the inspection part further comprises
an imaging part capturing an image of the plurality of plants in an inside of the cultivation container accommodated in the accommodation part, and wherein
the calculation part calculates the evaluation index on the basis of an analysis result of the image captured by the imaging part in addition to the measurement result obtained by the measurement part.

4. The cultivation system according to claim 2 or 3, wherein
the conveying machine conveys the same cultivation container to the inspection part plural times within 24 hours, wherein
the inspection part further comprises
a circadian rhythm calculation part calculating an amplitude or a period of circadian rhythm of each of the plurality of plants on the basis of time-series measurement results of plural times obtained by the measurement part, and wherein
the calculation part calculates the evaluation index with additionally taking into account the period information calculated by the circadian rhythm calculation part.

5. The cultivation system according to any one of claims 1 to 4, wherein
the cultivation container further comprises:

a first wireless communication part receiving information from an apparatus located within a given area by wireless communication; and
a writing part writing into the recording medium the information received by the first wireless communication part, and wherein

the recording part comprises a second wireless communication part transmitting information to an apparatus located within a given area by wireless communication, whereby the inspection result obtained by the inspection part is transmitted from the second wireless communication part to the first wireless communication part.

6. The cultivation system according to claim 5, further comprising
a transplanting part, on the basis of the inspection result obtained by the inspection part, transplanting the plant accommodated in the cultivation container to another cultivation container.

7. The cultivation system according to claim 6, wherein
the transplanting part further comprises a second recording processing part transcribing the inspection result obtained by the inspection part onto said another cultivation container of transplant destination.

F I G. 1

F I G. 2

FIG. 3

FIG. 4

EP 3 127 420 A1

F I G. 5

10

FIG. 6

~6
CONTROL TERMINAL DEVICE

~60
CONTROL PART

~62
STORAGE PART

~6P
INSPECTION PROGRAM

~621
INSPECTION INFORMATION

~65
COMMUNICATION PART

~61
TEMPORARY STORAGE PART

~63
CONNECTION PART

~64
IMAGE PROCESSING PART

~7
CENTRAL APPARATUS

~71

~5
CONTROL DEVICE

~53
CONVEYANCE CONTROL PART

~54
INSPECTION CONTROL PART

~3
CONVEYING MACHINE

~34
TRAVELING CONTROL PART

~36
ELEVATING CONTROL PART

~38
TRANSFER MACHINE

~4
INSPECTION PART

~412
SENSOR

~414
DRIVE PART

~43
EXCITATION LIGHT SOURCE

~42
CAMERA

~44
RECORDING PART

# FIG. 7A

CONTROL DEVICE 5   CONTROL TERMINAL DEVICE 6

( START )

**S1**
CONVEY CULTIVATION UNITS FROM SHIPPING/ARRIVAL SHELF TO ACCOMMODATION SHELF

THE FIRST DAY

THE THIRD DAY

( 3 )

**S2**
CONVEY CULTIVATION UNIT TO THE INSPECTION PART

( START )

**S601**
RECEIVE IDENTIFICATION INFORMATION

**S3**
SENSE PLACEMENT IN INSPECTION BOX

**S602**
FIRST TIME?   NO

**S4**
CLOSE SHUTTER

YES

**S603**
STORE RECEIVED IDENTIFICATION INFORMATION

**S5**
READ IDENTIFICATION INFORMATION

**S6**
TRANSMIT READ IDENTIFICATION INFORMATION

**S604**
EXECUTE IMAGE PROCESSING

**S7**
TURN ON EXCITATION LIGHT SOURCE

**S605**
IDENTIFY SIZE AND SHAPE OF PLANT

**S8**
START IMAGING

**S606**
CALCULATE INTENSITY OF DELAYED FLUORESCENCE

**S9**
TRANSMIT IMAGE SIGNAL TO CONTROL TERMINAL DEVICE

**S607**
STORE INSPECTION RESULTS

( 1 )   ( 2 )

22

# FIG. 7B

CONTROL DEVICE 5          CONTROL TERMINAL DEVICE 6

( 1 )                                ( 2 )

**S10**
STOP IMAGING

**S608**
THE SIXTH TIME OF INSPECTION HAS BEEN COMPLETED? — NO

**S11**
TURN OFF EXCITATION LIGHT SOURCE

YES

UP TO THE FIFTH TIME     THE SIXTH TIME

**S609**
CALCULATE AMPLITUDES AND PERIODS OF CIRCADIAN RHYTHMS

**S14**
RECEIVE AND RECORD INSPECTION RESULT

**S610**
CALCULATE NUMERICAL VALUE BASED ON EVALUATION FUNCTION

**S12**
OPEN SHUTTER

**S611**
TRANSMIT NUMERAL VALUE

**S13**
CONVEY CULTIVATION TRAY TO ACCOMMODATION SHELF

( END )

( 3 )

---

THE FOURTH DAY

**S15**
CONVEY CULTIVATION UNIT TO SHIPPING/ARRIVAL SHELF

( END )

FIG. 8

F I G. 9

THE NUMBER OF TIMES
OF MEASUREMENT

FIG. 10A

FIG. 10B

FIG. 11

FIG. 12

## FIG. 13

START

S21
CONVEY CULTIVATION TRAY
TO TRANSPLANTING PART

S22
HOLD CULTIVATION TRAY
AND CULTIVATION PALLET

S23
READ IDENTIFICATION
INFORMATION AND
EVALUATION INDICES

S24
DETERMINE IDENTIFICATION
INFORMATION OF PLANTS
TO BE TRANSPLANTED

S25
TRANSPLANT

S26
TRANSCRIBE IDENTIFICATION
INFORMATION EVALUATION
INDEX INTO RF TAG

S27
CONVEY CULTIVATION TRAY
TO SHIPPING/ARRIVAL SHELF

END

### INTERNATIONAL SEARCH REPORT

| | International application No. |
|---|---|
| | PCT/JP2015/060064 |

A.  CLASSIFICATION OF SUBJECT MATTER
*A01G7/00*(2006.01)i, *A01G9/00*(2006.01)i, *A01G9/02*(2006.01)i

According to International Patent Classification (IPC) or to both national classification and IPC

B.  FIELDS SEARCHED

Minimum documentation searched (classification system followed by classification symbols)
A01G7/00, A01G9/00, A01G9/02

Documentation searched other than minimum documentation to the extent that such documents are included in the fields searched
Jitsuyo Shinan Koho          1922-1996    Jitsuyo Shinan Toroku Koho    1996-2015
Kokai Jitsuyo Shinan Koho    1971-2015    Toroku Jitsuyo Shinan Koho    1994-2015

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y | JP 2011-188773 A  (Tsubakimoto Chain Co.), 29 September 2011 (29.09.2011), paragraphs [0034] to [0050]; fig. 1 & JP 4651743 B          & US 2012/0324788 A1 & WO 2011/111744 A       & CN 102781223 A & KR 10-2012-0114373 A | 1-3,5-7 |
| Y | JP 2014-18189 A  (Kobayashi Create Co., Ltd.), 03 February 2014 (03.02.2014), paragraphs [0017] to [0039]; fig. 1 to 5 (Family: none) | 1-3,5-7 |
| Y A | JP 2013-183702 A  (Hamamatsu Photonics Kabushiki Kaisha), 19 September 2013 (19.09.2013), paragraphs [0046] to [0060]; fig. 6 (Family: none) | 2,3 4 |

| ☒  Further documents are listed in the continuation of Box C. | ☐  See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered    to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 18 June 2015 (18.06.15) | 30 June 2015 (30.06.15) |

| Name and mailing address of the ISA/ Japan Patent Office 3-4-3,Kasumigaseki,Chiyoda-ku, Tokyo 100-8915,Japan | Authorized officer |
|---|---|
| | Telephone No. |

Form PCT/ISA/210 (second sheet) (July 2009)

**INTERNATIONAL SEARCH REPORT**

International application No.

PCT/JP2015/060064

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2014-36580 A (Tsubakimoto Chain Co.), 27 February 2014 (27.02.2014), paragraphs [0048] to [0083]; fig. 5 to 7 (Family: none) | 1-7 |
| A | JP 2001-61342 A (Toppan Forms Co., Ltd.), 13 March 2001 (13.03.2001), (Family: none) | 1-7 |
| A | JP 2001-78575 A (Central Information Development Co., Ltd.), 27 March 2001 (27.03.2001), (Family: none) | 1-7 |
| A | JP 2013-158277 A (Panasonic Corp.), 19 August 2013 (19.08.2013), & US 2015/0000191 A1    & WO 2013/114500 A1 & CN 104105397 A | 1-7 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014036580 A
- JP 2014502851 PCT
- JP 2006504956 PCT